# EUROPÄISCHE PATENTSCHRIFT

(11) **EP 3 392 006 B1**
(45) Veröffentlichungstag und Bekanntmachung des Hinweises auf die Patenterteilung: **08.04.2020**
(21) Anmeldenummer: 18167311.2
(22) Anmeldetag: 13.04.2018
(51) Int. Cl.: B26D 1/29, B26D 3/16, B26D 7/06, B26D 1/28, B29C 57/10, B65B 51/26, B29C 48/09, B29C 48/11, B29C 48/355

(54) **ABLÄNGVORRICHTUNG ZUR HERSTELLUNG VON VERPACKUNGSTUBENROHRKÖRPERN, BETRIEBSVERFAHREN SOWIE VERPACKUNGSTUBENHERSTELLSYSTEM**
CUTTING DEVICE FOR THE PREPARATION OF PACKAGING TUBE PIPE BODIES, OPERATION METHOD AND PACKAGING TUBE PRODUCTION SYSTEM
DISPOSITIF DE COUPE À LONGUEUR DESTINÉ À LA FABRICATION DES CORPS TUBULAIRES DES TUBES D'EMBALLAGE, PROCÉDÉS DE FONCTIONNEMENT AINSI QUE SYSTÈME DE FABRICATION DE TUBES D'EMBALLAGE

(30) Priorität: 21.04.2017 DE 102017108488
(43) Veröffentlichungstag der Anmeldung: 24.10.2018
(73) Patentinhaber: PackSys Global AG, 8630 Rüti ZH (CH)
(72) Erfinder: SCHUHN, Daniel, 8049 Zürich (CH)
(74) Vertreter: Patentanwälte Behrmann Wagner PartG mbB

(56) Entgegenhaltungen:
- EP-A1- 1 533 062
- EP-B1- 2 822 741
- DE-A1- 4 121 427
- DE-A1- 4 233 023

## Beschreibung

Die Erfindung betrifft eine Vorrichtung gemäß dem Oberbegriff des Anspruchs 1 zum Ablängen eines flexiblen, mindestens eine Kunststoffschicht umfassenden oder daraus bestehenden, insbesondere längsgeschweißten oder extrudierten, Endlosrohres zur Herstellung von (Verpackungs-)Tubenrohrkörpern für die Herstellung von Verpackungstuben, mit Fördermitteln zum Antreiben des Endlosrohres in einer Förderrichtung, mit Führungsmitteln zum Führen des Endlosrohres an seinem Außenumfang und mit entlang der Förderrichtung, insbesondere in der Förderrichtung, benachbart zu den Führungsmitteln angeordneten, bevorzugt rotatorischen, Schneidmitteln zum Ablängen des Endlosrohres entlang einer sich in Umfangsrichtung entlang des Endlosrohres erstreckenden Schnittlinie.

Ferner betrifft die Erfindung ein Verfahren zum Betreiben einer solchen Vorrichtung gemäß Anspruch 13 sowie ein Verpackungstubenherstellungssystem gemäß Anspruch 14 mit Endlosrohrherstellungsmitteln zum Herstellen eines flexiblen, mindestens eine Kunststoffschicht umfassenden oder daraus bestehenden Endlosrohres, insbesondere durch mittelbares Verschweißen über einen Kunststoffstreifen oder eine plastifizierte Kunststoffschnur oder durch unmittelbares Verschweißen eines (jeweils) mittels Umformmitteln zur Rohrform geformten Substratbandes, insbesondere Laminatbandes oder alternativ durch Extrusion eines bereits aufgrund des Extrusionsprozesses umfangsgeschlossenen Endlosrohres. Dabei ist es möglich, im Falle der Realisierung eines Schweißprozesses die Längskanten des zur Rohrform geformten Substrates auf Stoß oder überlappend anzuordnen und dann quasi unmittelbar zu verweißen oder alternativ mit Abstand zueinander und über eine plastifizierte Kunststoffschnur miteinander zu verschweißen. Das Verpackungstubenherstellungssystem umfasst eine nach dem Konzept der Erfindung ausgebildete Ablängvorrichtung zur Herstellung von (Verpackungs-)Tubenrohrkörpern aus dem Endlosrohr (durch Ablängen des Endlosrohres) sowie der Ablängvorrichtung nachgeordnete Mittel, sog. Header, zum Verbinden der mittels der Vorrichtung bereitgestellte Tubenrohrkörper mit einem Tubenkopf.

Bei der Verpackungstubenherstellung wird zunächst ein flexibles Endlosrohr hergestellt, beispielsweise durch Extrusion oder Längsverschweißen eines, in der Regel um einen Dorn zu einer Rohrform umgeformten Substratbandes, meist einem mehrschichtigen Laminat. Das Endlosrohr wird dann in einzelne Tubenrohrkörper abgelängt, an die dann in einem nachfolgenden Prozessschritt Tubenköpfe angebracht werden. Der letztgenannte Prozessschritt findet in sog. Headern statt, bei denen die erforderlichen Werkzeuge sowohl auf den Außendurchmesser als auch auf den Innendurchmesser des Endlosrohres bzw. der daraus abgelängten Tubenrohrkörper abgestimmt sein müssen. Ändert sich die Wandstärke des Endlosrohres, also die Laminatdicke eines längsverschweißten Rohres oder alternativ die Dicke eines extrudierten Rohres, so ändert sich zwangsläufig zumindest einer der beiden Endlosrohrdurchmesser. Sollen also Verpackungstuben mit veränderter Wandstärke hergestellt werden, ist es erforderlich, die Werkzeuge im Header anzupassen. Um den Anpassungsaufwand im Header klein zu halten, ist es oftmals wünschenswert, den Innendurchmesser der Tubenrohrköper unverändert zu belassen, wodurch bei einer Vielzahl von gängigen Headern - verglichen mit einem Konstanthalten des Außendurchmessers - ein einfacher und kostengünstiger Werkzeugwechsel einhergeht.

Dadurch entsteht allerdings ein, beispielsweise aus der EP 2 822 741 B1 bekanntes Problem: Beim Abschneiden (Ablängen) eines Tubenrohrkörpers vom Endlosrohr mit einem umlaufenden Messer ist es erforderlich, das Endlosrohr zu stabilisieren. Dies geschieht in der Praxis durch den Einsatz einer Führungshülse. Dieses Prinzip ist ebenfalls bereits in der DE 41 21 427 A1 beschrieben. Dabei muss allerdings der Innendurchmesser der Führungshülse gut an den Außendurchmesser des Endlosrohres angepasst werden. Typischerweise wird in der Praxis eine Durchmesserdifferenz von deutlich unter 0,1mm erreicht, da ansonsten das Endlosrohr beim Eintauchen der Klinge nach radial innen weggedrückt wird, was unsaubere Schnitte zur Folge hat. Mithin kann in der Praxis ein zuverlässiger Schnitt nicht mehr gewährleistet werden, wenn sich die Wandstärke um mehr als 50µm ändert. Da der Innendurchmesser des Endlosrohres aufgrund der vorerwähnten ansonsten notwendigen, aufwendigen Header-Anpassung nicht geändert werden soll, müssen in der Praxis eine Vielzahl von Führungshülsen mit minimal differierenden Innendurchmessern für das Schneidmesser bereitgestellt werden. Dies führt in der Produktion jedoch regelmäßig dazu, dass eine Führungshülse mit einem bestimmten Innendurchmesser (Führungsdurchmesser) wünschenswert wäre, die dann doch nicht sofort verfügbar ist.

Insgesamt ist also eine hochpräzise Anpassung der Innendurchmesser der Führungshülsen notwendig, um unterschiedliche Laminate bearbeiten, insbesondere ablängen zu können. Dies bedeutet, dass die Anlage zwischen Führungshülse und Laminat genau oder perfekt passen muss, um saubere Schnitte zu ermöglichen. Mit anderen Worten ausgedrückt bedeutet dies, dass die Führungshülsen aus dem Stand der Technik Präzisionshülsen oder Präzisionswerkzeuge darstellen, die bereits bei kleinsten Unterschieden in der Zusammensetzung und/oder dem Aufbau des Laminats entsprechend ausgewechselt werden müssen, um dem Anspruch an die präzise Abstimmung zwischen Laminat und Führungshülse zu genügen.

Ausgehend von dem vorgenannten Stand der Technik liegt der Erfindung die Aufgabe zugrunde, eine hinsichtlich der Schneidqualität optimierte Ablängvorrichtung zum Herstellen von Tubenrohrkörpern für Verpackungstuben aus einem Endlosrohr anzugeben. Dabei soll auf eine Vielzahl unterschiedlicher Führungshülsen zur Gewährleistung einer Optimierung bzw. Stützung des Endlosrohres während des Ablängprozesses verzichtet werden können. Gleichzeitig soll die notwendige laminatabhängige Präzision erreicht oder beibehalten werden, um ein sauberes Ablängen zu gewährleisten. Ferner besteht die Aufgabe darin, ein Verfahren zum Betreiben einer solchen Vorrichtung anzugeben sowie ein eine solche Vorrichtung umfassendes Verpackungstubenherstellungssystem.

Diese Aufgabe wird hinsichtlich der Ablängvorrichtung mit den Merkmalen des Anspruchs 1 gelöst, d.h. bei einer gattungsgemäßen Ablängvorrichtung dadurch, dass die Führungsmittel eine Mehrzahl von in einer Umfangsrichtung nebeneinander angeordneten, (gemeinsam) eine querschnittlich (im Wesentlichen, insbesondere möglichst exakt) kreisförmige Führungshüllkontur zur Führung des Endlosrohres an seinem Außenumfang begrenzenden und mit Einstellmitteln zur Einstellung eines Führungshüllkonturdurchmessers senkrecht zur Förderrichtung, insbesondere stufenlos, verstellbaren Führungselementen aufweisen.

Hinsichtlich des Verfahrens wird die Aufgabe mit den Merkmalen des Anspruchs 13 gelöst, d.h. bei einem gattungsgemäßen Verfahren dadurch, dass der Führungshüllkonturdurchmesser der von den Führungselementen definierten Führungshüllkontur, bevorzugt stufenlos, eingestellt (variiert) und damit an den Außendurchmesser des Endlosrohres angepasst wird.

Hinsichtlich des Verpackungstubenherstellungssystems wird die Aufgabe mit den Merkmalen des Anspruchs 14 gelöst.

Vorteilhafte Weiterbildungen der Erfindung sind in den Unteransprüchen angegeben. In den Rahmen der Erfindung fallen sämtliche Kombinationen aus zumindest zwei von der in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, den Führungsdurchmesser der Führungsmittel einstellbar zu gestalten, also die Führungsmittel so auszubilden, dass deren (innerer) Führungsdurchmesser an den Außendurchmesser des Endlosrohres anpassbar ist, um auf diese Weise Dickenschwankungen ausgleichen zu können bzw. ohne Wechsel der Führungsmittel mit derselben Anlage Endlosrohre mit unterschiedlichem Außendurchmesser exakt bzw. mit hoher Qualität / ohne Schnittfehler ablängen zu können. Um dies zu erreichen umfassen die Führungsmittel eine Mehrzahl von in einer Umfangsrichtung nebeneinander angeordneten, querschnittlich eine kreisförmige Führungshüllkontur begrenzenden Führungselementen. Dies bedeutet, dass die Führungselemente mit ihrer (inneren) Führungsfläche, mit der sie das Endlosrohr stützen, auf einer gedachten, im wesentlichen, ganz besonderes bevorzugt möglichst exakten, Kreisbahn liegen, um das Endlosrohr an seinem Außenumfang zu stützen. Um nun den Durchmesser der Führungshüllkontur, d.h. der gedachten Kreisbahn an den Außendurchmesser des Endlosrohres anpassen zu können, sind den Führungselementen erfindungsgemäß Einstellmittel zugeordnet, mit denen die Führungsmittel in radialer Richtung, d.h. senkrecht zur Förderrichtung verstellbar, insbesondere auslenkbar sind.

Im Hinblick auf die konkrete Ausgestaltung und Anzahl der in Umfangsrichtung um die Förderrichtung bzw. Axialrichtung angeordneten Führungselemente gibt es unterschiedliche Möglichkeiten. Wesentlich ist, dass das Endlosrohr an einer Mehrzahl von in Umfangsrichtung nebeneinander angeordneten, bevorzugt in Umfangsrichtung beabstandeten Positionen bzw. Stellen von den Führungselementen kontaktiert und damit geführt wird.

Im Hinblick auf die Materialwahl der Führungselemente ist es aus Gründen der Maßhaltigkeit bevorzugt, diese aus Metall, beispielsweise Aluminium oder Stahl, ganz besonders bevorzugt Federstahl auszubilden. Bei einer Ausbildung der Führungselemente aus Metall ist es möglich, diese mit einer reibungsminimierenden Beschichtung am Innenumfang zu versehen oder alternativ bei entsprechender Oberflächengüte auch unbeschichtet zu belassen.

Durch die Anpassung des Führungshüllkonturdurchmessers, d.h. des Durchmessers der gedachten (umfangsgeschlossenen) Kreisbahn, auf welcher die Führungselemente mit ihrer radial inneren Führungsseite bzw. -fläche liegen, kann eine optimale Führung bzw. Stützung des Endlosrohres während des Schneidvorgangs gewährleistet werden, ohne die Führungsmittel als solches austauschen zu müssen, wie im Stand der Technik. Für den bevorzugten Fall der Realisierung einer stufenlosen Verstellbarkeit der Führungsmittel in radialer Richtung kann zudem gewährleistet werden, dass quasi jeder Endlosrohrdurchmesser optimal gestützt werden kann, was im Stand der Technik bisher nicht möglich war, da durch den notwendigen Austausch einer Führungshülse nur Durchmesserabstufungen realisierbar waren.

Bevorzugt sind Schneidmittel und Führungsmittel gemeinsam, insbesondere mittels eines Schlittens entlang der Förderachse bzw. - richtung hin und her verstellbar, damit die Kombination aus Führungsmitteln und Messer während des, bevorzugt rotatorischen Schneidvorgangs synchron mit dem Endlosrohr in der Förderrichtung mitbewegbar ist bzw. wird.

Im Rahmen des erfindungsgemäßen Verfahrens wird die Ablängvorrichtung derart betrieben, dass der Führungshüllkonturdurchmesser, je nach Ausgestaltung der Einstellmittel manuell oder mittels eines Antriebs, d.h. automatisch variiert bzw. eingestellt und damit an den Außendurchmesser des Endlosrohres angepasst wird. Bevorzugt wird der Führungshüllkonturdurchmesser dabei so gewählt, dass eine Differenz zum Außendurchmesser des Endlosrohres weniger als 0,1mm, besonders bevorzugt weniger als 0,08mm, ganz besonders bevorzugt weniger als 0,05mm beträgt. Der Führungshüllkonturdurchmesser sollte jedoch minimal größer sein als der Außendurchmesser des Endlosrohres um eine zu große Reibung bzw. schlimmstenfalls eine Blockade zu vermeiden.

Besonders bevorzugt ist es, wenn das Endlosrohr mehrere in radialer Richtung benachbarte Schichten aufweist, von denen bevorzugt mindestens eine Schicht als Barriereschicht gegen Sauerstoff- und/oder Feuchtigkeitsdurchtritt ausgebildet ist, um das zu verpackende Produkt, beispielsweise ein medizinisches Erzeugnis, ein chemisches Erzeugnis, ein Kosmetikerzeugnis oder ein Lebensmittelerzeugnis entsprechend zu schützen.

Wie bereits angedeutet ist eine Ausführungsform besonders bevorzugt, bei der zwischen in Umfangsrichtung benachbarten Führungselementen ein Spalt vorgesehen ist, um somit auf einfache Weise eine Radialverstellbarkeit einer Mehrzahl der Führungselemente, bevorzugt sämtlicher der Führungselemente mittels der Einstellmittel zu ermöglichen. Anders ausgedrückt ist in Weiterbildung der Erfindung vorgesehen, dass unmittelbar in Umfangsrichtung Benachbarte der Führungselemente in Umfangsrichtung beabstandet sind. Bevorzugt weist die Spalte eine größere Axial- als Umfangserstreckung auf. Grundsätzlich denkbar ist alternativ auch eine in Umfangsrichtung überlappende Anordnung um Raum für die Verkleinerung des Führungshüllkonturdurchmessers zu realisieren.

Um eine möglichst großflächige Abstützung des Endlosrohres zu erreichen ist es bevorzugt, wenn die Führungselemente an ihrem Innenumfang kreissegmentförmig konturiert sind. Etwaige hieraus resultierende Kreisförmigkeitsfehler sind bei den bevorzugten, geringen Führungshüllkonturdurchmesseränderungen bzw. -abweichungen vom Krümmungsradius des Endlosrohres vernachlässigbar. Bevorzugt entspricht der Krümmungsradius einem mittleren Soll-Außenkrümmungsradius des Endlosrohres.

Besonders zweckmäßig ist es, wenn die Einstellmittel derart ausgebildet sind, dass mit diesen gleichzeitig mehrere, insbesondere sämtliche der Führungselemente in radialer Richtung verstellbar sind, insbesondere durch jeweiliges Beaufschlagen mit einer Verstellkraft, bevorzugt entgegen einer Rückstellfederkraft. Wie später noch erläutert werden wird, ist es besonders bevorzugt, wenn diese Rückstellfederkraft unmittelbar aus einer elastischen Deformation der Führungselemente resultiert. Grundsätzlich ist es möglich, einzelnen Führungselementen oder Gruppen von Führungselementen separate Verstellkraftbeaufschlagungselemente bzw. -mittel der Einstellmittel, beispielsweise einzelne Aktuatoren zuzuordnen. Besonders bevorzugt ist es, wenn die Einstellmittel derart ausgebildet sind, beispielsweise durch das Vorsehen einer auf sämtliche Führungselemente gleichzeitig wirkenden Einstellhülse, dass eine Verstellkraftbeaufschlagung sämtlicher Führungselemente mit einem einzigen Verstellkraftbeaufschlagungselement, insbesondere der vorerwähnten Einstellhülse möglich ist. Dabei kann die Einstellhülse je nach Ausführungsform manuell und/oder mittels eines, beispielsweise elektronischen Antriebs rotierbar sein.

Wie bereits erwähnt ist es besonders zweckmäßig, wenn die Einstellmittel die Führungselemente durch elastisches Verformen derselben senkrecht zur Förderrichtung verstellend ausgebildet und angeordnet sind. Dabei ist es besonders zweckmäßig, wenn die elastische Deformation der Führungselemente nach radial innen erfolgt, also derart, dass eine aus der Deformation resultierende Rückstellfederkraft in radialer Richtung nach außen wirkt, sodass die Führungselemente bei entsprechender Reduzierung bzw. einem Lösen einer Verstell- bzw. Haltekraft bestrebt sind selbsttätig nach radial außen zu federn und damit den Führungshüllkonturdurchmesser zu vergrößern. Grundsätzlich ist auch die umgekehrte Lösung realisierbar, also derart, dass die Führungselemente mittels der Einstellmittel, insbesondere einer Einstellhülse in radialer Richtung nach außen elastisch deformiert, insbesondere ausgelängt werden und dann selbsttätig nach radial innen zurückfedern, sobald die Einstellmittel entsprechend bewegt werden.

Ganz besonders bevorzugt sind die Einstellmittel derart ausgebildet, dass diese eine axiale Verstellbewegung in die Verstellbewegung der Führungselemente senkrecht zur axialen Richtung (Förderrichtung) umwandeln. Anders ausgedrückt sind die Einstellmittel derart ausgebildet, dass eine axiale und/oder rotatorische Verstellkraft in eine radiale Verstellkraftkomponente umgewandelt wird. Dies kann beispielsweise dadurch realisiert werden, dass die Einstellmittel eine vorerwähnte Einstellhülse umfassen, die über mindestens eine gekrümmte oder schräge, insbesondere konische Kontaktfläche mit den Führungselementen zusammenwirkt, sodass aus einer axialen, insbesondere rotatorischen, Verstellbewegung der Einstellhülse eine radiale Verstellbewegung der Führungselemente resultiert, in dem die Führungselemente in radialer Richtung kraftbeaufschlagt werden. Ganz besonders bevorzugt ist es dabei, wenn die Einstellhülse ein Gewinde aufweist, das mit einem Gegengewinde zusammenwirkt, derart, dass die Einstellhülse durch Rotieren bzw. Verschrauben mit dem Gegengewinde entlang der Förderrichtung bzw. -achse angetrieben wird, um auf diese Weise in radialer Richtung verstellend mit den Führungselementen zusammenzuwirken bzw. auf diese einzuwirken. Wie erwähnt ist es dabei besonders bevorzugt, wenn die Einstellhülse, durch Verstellen in eine erste Axialrichtung, insbesondere entgegen der Förderrichtung die Führungselemente elastisch nach radial innen auslenkt, sodass die Führungselemente durch Verstellen der Einstellhülse in die entgegengesetzte Axialrichtung, insbesondere in der Förderrichtung entsprechend des axialen Verstellweges nach radial außen federn und damit den Führungshüllkonturdurchmesser erweitern. Zur Erzeugung der Verstellkraft wirken die Einstellmittel, insbesondere die Einstellhülse, wie erläutert, über mindestens eine in axialer Richtung gekrümmte oder abgeschrägte, insbesondere konische Kontaktfläche mit den Führungselementen zusammen, wobei diese gekrümmte oder schräge Kontaktfläche an den Einstellmitteln, insbesondere der Einstellhülse oder an den Führungselementen realisiert sein kann. Bevorzugt erfolgt das Zusammenwirken über zwei in axialer Richtung gekrümmte oder schräge, zusammenwirkende bzw. komplementäre Kontaktflächen, von denen dann eine an den Einstellmitteln bzw. der Einstellhülse und die andere an den Führungselementen realisiert ist. Ganz besonders bevorzugt ist die Realisierung mindestens einer konischen Kontaktfläche, bevorzugt einer (außen-)konischen und einer (innen-)konischen Kontaktfläche bzw. Kontaktflächenpaarung. Dabei ist der Konuswinkel zwischen der Kontaktfläche und der Förderrichtung bzw. -achse bevorzugt aus einem Wertebereich zwischen 1° und 5°, ganz besonders bevorzugt zwischen 2° und 4° gewählt. Für den bevorzugten Fall der Realisierung einer Gewindepaarung zwischen Einstellhülse bzw. einem Gewinde der Einstellhülse und einem Gegengewinde ist es bevorzugt ein Feingewinde zu realisieren, um eine möglichst gute Feinverstellbarkeit des Füllkonturdurchmessers zu realisieren. Ganz besonders bevorzugt ist eine Gewindesteigung der Gewindepaarung aus einem Wertebereich zwischen 2mm und 6mm, bevorzugt zwischen 3mm und 5mm gewählt.

Insbesondere für den bevorzugten Fall der Realisierung elastisch deformierbarer Führungselemente ist es bevorzugt, diese als in der Förderrichtung orientierte Führungsfinger mit einem freien und einem festen Ende auszubilden, wobei es besonders bevorzugt ist, wenn die freien Enden der Führungsfinger in der Förderrichtung weisen und der Wurzelbereich in die entgegengesetzte Richtung. Im Hinblick auf eine vereinfachte Fertigbarkeit bei gleichzeitiger Realisierung geringer Toleranzen zur Ausbildung einer möglichst exakten Kreisbahn als Führungshüllkontur ist es bevorzugt, wenn die Führungsfinger mit ihrem Wurzelbereich an einem gemeinsamen, bevorzugt ringförmigen Halteabschnitt ausgebildet bzw. angeordnet sind, wobei es besonderes bevorzugt ist, die Führungsfinger monolithisch mit dem Halteabschnitt auszubilden. Bevorzugt sind die Einstellmittel derart ausgebildet und auf die Führungsmittel abgestimmt, dass der Führungshüllkonturdurchmesser, insbesondere durch axiales Verstellen einer Einstellhülse, ganz besonders bevorzugt durch Verdrehen in einem Gegengewinde, um einen Wert von mindestens 0,1mm, bevorzugt um mindestens 0,2mm, noch weiter bevorzugt um mindestens 0,4mm variierbar ist. Insbesondere kann der Führungshüllkonturdurchmesser um einen Wert des Wertebereichs zwischen 0,1mm und 2mm, bevorzugt zwischen 0,2mm und 1,5mm, ganz besonders bevorzugt zwischen 0,4mm und 1,0mm ausgebildet sein.

Wie eingangs erwähnt liegen die Führungselemente mit ihrem radial inneren Führungsabschnitt auf einer gedachten Kreisbahn, also einer kreisförmigen Führungshüllkontur. Bevorzugt ist es, wenn diese möglichst exakt gearbeitet ist. Ganz besonders bevorzugt ist es, wenn die Radialposition der Führungselemente untereinander hierzu um weniger als 0,1mm verschieden sind, also nur minimal von der gedachten Kreisbahn abweichen.

In Weiterbildung der Erfindung ist mit Vorteil vorgesehen, den Führungsmitteln, insbesondere den Einstellmitteln, insbesondere in Form einer Skala zuzuordnen, an der ein aktuell eingestellter Führungshüllkonturdurchmesser ablesbar ist. Eine solche Ausführungsform lässt sich besonders einfach bei einer Einstellhülse realisieren, beispielsweise durch das Vorsehen einer Skalierung an einer Hülse, die relativ zu einem ortfesten Anzeiger bzw. Ablesefeld/-element rotierbar ist. Alternativ ist selbstverständlich denkbar, dieses Ableseelement an der Einstellhülse vorzusehen und die Skala ortsfest anzuordnen. Denkbar ist es zudem, den aktuell eingestellten Durchmesser mittels entsprechender Sensorik zu detektieren und, insbesondere visuell, beispielsweise an einem Bildschirm anzuzeigen.

Um die Reibung zwischen den Führungselementen und dem Endlosrohr zu minimieren, ist es, wie erwähnt möglich, die Führungselemente an ihrem Innenumfang zu beschichten. Zusätzlich oder alternativ ist es möglich in mindestens einem der Führungselemente, bevorzugt sämtlichen Führungselementen (jeweils) eine Vielzahl von Gasaustrittsöffnung zur Erzeugung eines Gaspolsters radial zwischen den Führungselementen und dem Außenumfang des Endlosrohres zu realisieren.

Im Hinblick auf die Realisierung eines Messers der Schneidmittel ist es bevorzugt, wenn dieses beim Ablängen bzw. zum Ablängen des Endlosrohres an in axialer Richtung, bevorzugt in der Förderrichtung weisenden, bevorzugt in radialer Richtung planaren, Stirnflächen der Führungselemente minimal beabstandet ist, insbesondere mit einem axialen Spaltmaß zwischen 0,05mm und 0,15mm. Unabhängig davon ist es bevorzugt, wenn das mindestens eine Messer der Schneidmittel oder alternativ mehrere in Umfangsrichtung beabstandete Messer der Schneidmittel zum Schneiden des Endlosrohres in Umfangsrichtung um die Förderrichtung bzw. -achse rotiert wird bzw. werden.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine Darstellung einer nach dem Konzept der Erfindung ausgebildeten Ablängvorrichtung in einer stirnseitigen Ansicht mit Blick entgegen einer axialen Förderrichtung eines Endlosrohres, und
- Fig. 2: eine geschnittene, perspektivische Schrägansicht der Vorrichtung gemäß Fig. 1.

In den Figuren sind gleiche Elemente und Elemente mit der gleichen Funktion mit den gleichen Bezugszeichen gekennzeichnet.

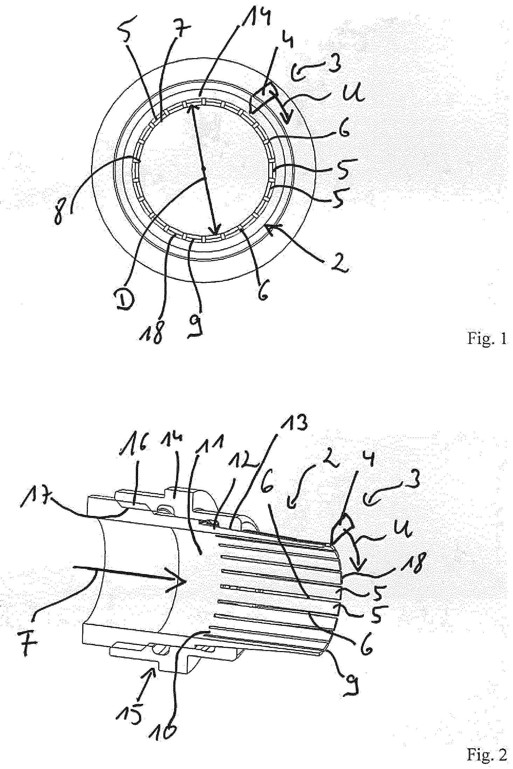

In den Fig. 1 und 2 ist eine Ablängvorrichtung 1 zum Ablängen eines nicht gezeigten, flexiblen, mindestens eine Kunststoffschicht umfassenden oder daraus bestehenden Endlosrohres zur Herstellung von Tubenkörpern für die Herstellung von Verpackungstuben gezeigt. Das Endlosrohr wird in an sich bekannter Weise mit nicht gezeigten Fördermitteln in einer Förderrichtung F transportiert, die in Fig. 1 senkrecht auf der Zeichnungsebene steht.

Das Endlosrohr wird Führungsmitteln 2 zugeführt, die das Endlosrohr an seinem Außenumfang führen und stützen. In der Förderrichtung F den Führungsmitteln 2 nachgeordnet sind stark schematisiert dargestellte, an sich bekannte Schneidmittel 3 angeordnet, vorliegend umfassend ein Messer 4, welches in radialer Richtung von außen in das Endlosrohr eintauchbar und in einer Umfangsrichtung U um das Endlosrohr rotierbar ist, um eine sich in der Umfangsrichtung U erstreckende Schnittlinie zu erzeugen. Mittels der Schneidmittel 3 werden gleichlange Tubenrohrkörper aus dem Endlosrohr abgelängt bzw. hergestellt, die dann in an sich bekannter Weise der Ablängvorrichtung nachgeordnet in einem sog. Header mit einem Tubenkopf versehen werden.

Wie sich aus einer Zusammenschau der Fig. 1 und 2 ergibt, ist das Messer 4 der Schneidmittel 3 in der Förderrichtung F unmittelbar benachbart zur axialen, in der Förderrichtung F orientierten Stirnseite 18 der Führungselemente angeordnet und beim rotativen Schneidvorgang axial minimal von den planaren Stirnflächen 18 beabstandet. Bevorzugt beträgt der Abstand generell zwischen 0,05mm und 0,15mm.

Die Führungsmittel 2 umfassen eine Mehrzahl von in der Umfangsrichtung U (um das Endlosrohr) nebeneinander angeordneten Führungselementen 5, wobei die unmittelbar in der Umfangsrichtung U Benachbarten der Führungselemente 5 in der Umfangsrichtung U beabstandet sind, also einen sich in axialer Richtung erstreckenden Spalt 6 zwischen sich begrenzen. Die Führungselemente 5 sind elastisch verformbar und dadurch in radialer Richtung auslenkbar ausgebildet. In dem vorliegenden Ausführungsbeispiel sind die Führungselemente 5 hierzu aus Federstahl ausgebildet - eine andere Materialwahl ist alternativ realisierbar.

Die Führungselemente 5 sind an ihrer innenumfänglichen Führungsfläche 7 kreissegmentförmig konturiert und begrenzen eine im wesentlichen querschnittlich kreisförmige Führungshüllkontur 8, also einen sich in Umfangsrichtung über die Spalte 6 hinwegerstreckende gedachte Kreisbahn. Der Führungshüllkonturdurchmesser D dieser Führungshüllkontur 8 ist durch radiales, gemeinsames Verstellen der Führungselemente 5 in kleinen Grenzen variierbar, um somit eine Anpassung des Führungshüllkonturdurchmessers D an den Außendurchmesser des Endlosrohres zu erreichen.

In dem vorliegenden Ausführungsbeispiel sind die Führungselemente 5 hierzu als Führungsfinger ausgebildet, jeweils aufweisend ein in der Förderrichtung F weisendes freies Ende 9 und einen davon entgegen der Förderrichtung F abgewandten Wurzelbereich 10, wobei die Wurzelbereiche 10 der Führungselemente 5 in einen gemeinsamen, ringförmigen Halteabschnitt 11 münden, mit dem die Führungselemente 5 monolithisch (einteilig) ausgebildet sind. An ihrem Außenumfang sind die Führungselemente 5 vorliegend in axialer Richtung abgeschrägt, also winklig zur Förderrichtung F bzw. -achse geneigt. Anders ausgedrückt verjüngt sich der Außenumfang der Führungselemente 5 axial, vorliegend in die Förderrichtung F. Dies ist vorliegend als konusförmige erste Kontaktfläche 12 realisiert, die mit einer formkongruenten korrespondierenden zweiten innenkonusförmigen Kontaktfläche 13 einer Einstellhülse 14 von Einstellmitteln 15 zusammenwirkt. Die Einstellhülse 14 weist vorliegend ein, hier beispielhaft als Innengewinde ausgebildetes Gewinde 16 auf, welches eingreift in ein als Außengewinde ausgebildetes Gegengewinde 17, welches vorliegend beispielhaft am Außenumfang des Halteabschnittes 11 ausgebildet ist. Durch, beispielsweise manuelles, Rotieren der Einstellhülse 14 in der Umfangsrichtung U wandert die Einstellhülse 14 entlang der Förderrichtung F, vorliegend entgegen der Förderachse, also in axialer Richtung, wobei diese Axialbewegung über die zusammenwirkenden Kontaktflächen 13, 12 umgewandelt wird in eine radiale Verstellbewegung der Führungselemente 5 nach innen, wodurch der Führungshüllkonturdurchmesser D verkleinert wird, indem die Führungselemente 5 in radialer Richtung nach innen elastisch ausgelenkt werden. Zum Vergrößern des Führungshüllkonturdurchmessers D muss die Einstellhülse 14 in die entgegengesetzte Umfangsrichtung rotiert werden, wodurch die Führungselemente 5 selbsttätig in radialer Richtung nach außen zurückfedern, wobei der Rückfederweg begrenzt ist durch die Einstellhülse 14. Anstelle des Zusammenwirkens von zwei schrägen, formkonkurrenten Kontaktfläche ist es denkbar, nur eine abgeschrägte, bevorzugt innenkonusförmige oder alternativ außenkonusförmige Kontaktfläche an der Einstellhülse oder alternativ an den Führungselementen 5 vorzusehen.

Auf die konkret dargelegte Ausführungsform ist die Erfindung nicht beschränkt. Es sind vielfältige Variationen realisierbar, insbesondere auch im Hinblick auf die konkrete Ausbildung der Einstellmittel zur Variation des Führungshülldurchmessers D.

### Bezugszeichenliste

- 1: Ablängvorrichtung
- 2: Führungsmittel
- 3: Schneidmittel
- 4: Messer
- 5: Führungselement
- 6: Spalte
- 7: Führungsfläche
- 8: Führungshüllkontur
- 9: freies Ende
- 10: Wurzelbereich
- 11: Halteabschnitt
- 12: erste Kontaktfläche
- 13: zweite Kontaktfläche
- 14: Einstellhülse
- 15: Einstellmittel
- 16: Gewinde
- 17: Gegengewinde
- 18: Stirnflächen

- F: Förderrichtung
- U: Umfangsrichtung
- D: Führungshüllkonturdurchmesser

## Patentansprüche

1. Vorrichtung zum Ablängen eines flexiblen, mindestens eine Kunststoffschicht umfassenden oder daraus bestehenden Endlosrohres zur Herstellung von Tubenrohrkörpern für die Herstellung von Verpackungstuben, mit Fördermitteln zum Antreiben des Endlosrohres in einer Förderrichtung (F), mit Führungsmitteln (2) zum Führen des Endlosrohres an seinem Außenumfang und mit entlang der Förderrichtung (F) benachbart zu den Führungsmitteln (2) angeordneten Schneidmitteln (3) zum Ablängen des Endlosrohres entlang einer sich in Umfangsrichtung (U) entlang des Endlosrohres erstreckenden Schnittlinie,
**dadurch gekennzeichnet,**
**dass** die Führungsmittel (2) eine Mehrzahl von in einer Umfangsrichtung (U) nebeneinander angeordneten, eine querschnittlich kreisförmige Führungshüllkontur (8) begrenzenden und mit Einstellmitteln (15) zur Einstellung eines Führungshüllkonturdurchmessers (D) senkrecht zur Förderrichtung (F) verstellbaren Führungselementen (5) aufweisen.

2. Vorrichtung nach Anspruch 1,
**dadurch gekennzeichnet,**
**dass** unmittelbar in Umfangsrichtung (U) Benachbarte der Führungselemente (5) in Umfangsrichtung (U) beabstandet sind.

3. Vorrichtung nach einem der Ansprüche 1 oder 2,
**dadurch gekennzeichnet,**
**dass** die Führungselemente (5) innenumfänglich kreissegmentförmig konturiert sind.

4. Vorrichtung nach einem der vorhergehenden Ansprüche,
**dadurch gekennzeichnet,**
**dass** die Einstellmittel (15) gleichzeitig mehrere, insbesondere sämtliche, der Führungselemente (5) in radialer Richtung verstellend ausgebildet sind, insbesondere durch jeweiliges Beaufschlagen mit einer Verstellkraft, bevorzugt entgegen einer Rückstellfederkraft.

5. Vorrichtung nach einem der vorhergehenden Ansprüche,
**dadurch gekennzeichnet,**
**dass** die Einstellmittel (15) die Führungselemente (5) durch elastisches Verformen der Führungselemente (5) senkrecht zur Förderrichtung (F) verstellend ausgebildet und angeordnet sind.

6. Vorrichtung nach einem der vorhergehenden Ansprüche,
**dadurch gekennzeichnet,**
**dass** die Einstellmittel (15), insbesondere eine Einstellhülse (14) der Einstellmittel (15), über mindestens eine gekrümmte oder schräge, insbesondere konische, Kontaktfläche (12, 13) mit den Führungselementen (5) zur Umwandlung einer axialen Verstellbewegung der Einstellmittel (15) in die Verstellbewegung der Führungselemente (5) zusammenwirkend angeordnet sind.

7. Vorrichtung nach Anspruch 6,
**dadurch gekennzeichnet,**
**dass** die Einstellhülse (14) ein Gewinde (16) aufweist, das zum axialen Verstellen der Einstellhülse (14) und damit Verstellkraftbeaufschlagen der Führungselemente (5) senkrecht zur Förderrichtung (F) mit einem Gegengewinde (17) zusammenwirkend angeordnet ist.

8. Vorrichtung nach einem der vorhergehenden Ansprüche,
**dadurch gekennzeichnet,**
**dass** die Führungselemente (5) als jeweils ein, bevorzugt in der Förderrichtung (F) weisendes, freies Ende (9) aufweisende Führungsfinger ausgebildet sind, die an ihrem jeweiligen von dem freien Ende (9) abgewandten Wurzelbereich (10) ortfest angeordnet sind, insbesondere an einem gemeinsamen, bevorzugt ringförmigen, Halteabschnitt.

9. Vorrichtung nach einem der vorhergehenden Ansprüche,
**dadurch gekennzeichnet,**
**dass** der Führungshüllkonturdurchmesser (D) mittels der Einstellmittel (15) um einen Wert von mindestens 0,1mm, bevorzugt um mindestens 0,2mm, noch weiter bevorzugt um mindestens 0,4mm variierbar ist und/oder um einen Wert aus einem Wertebereich zwischen 0,1mm und 2,0mm, bevorzugt zwischen 0,2mm und 1,5mm, ganz besonders bevorzugt zwischen 0,4mm und 1,0mm.

10. Vorrichtung nach einem der vorhergehenden Ansprüche,
**dadurch gekennzeichnet,**
**dass** Radialpositionen Führungselemente (5) untereinander um weniger als 0,1mm verschieden sind.

11. Vorrichtung nach einem der vorhergehenden Ansprüche,
**dadurch gekennzeichnet,**
**dass** mindestens eines der Führungselemente (5), bevorzugt sämtliche Führungselemente (5), eine Vielzahl von Gasaustrittsöffnungen zur Erzeugung eines Gaspolsters aufweisen.

12. Vorrichtung nach einem der vorhergehenden Ansprüche,
**dadurch gekennzeichnet,**
**dass** ein Messer (4) der Schneidmittel (3) beim Ablängen des Endlosrohres von in axialer Richtung, insbesondere in der Förderrichtung (F) weisenden, bevorzugt planaren, Stirnflächen (18) der Führungselemente (5) beabstandet rotierbar angeordnet ist.

13. Verfahren zum Betreiben einer Vorrichtung nach einem der vorhergehenden Ansprüche,
**dadurch gekennzeichnet,**
**dass** der Führungshüllkonturdurchmesser (D) der von den Führungselementen (5) definierten Führungshüllkontur (8) eingestellt und damit an den Außendurchmesser des Endlosrohres angepasst wird.

14. Verpackungstubenherstellungssystem, mit, insbesondere eine Schweißeinrichtung zum Längsverschweißen eines zur Rohrform geformten Substratbandes oder Extrusionsmittel umfassenden, Endlosrohrherstellungsmitteln zum Herstellen eines flexiblen, mindestens eine Kunststoffschicht umfassenden oder daraus bestehenden Endlosrohres, mit einer diesen nachgeordneten Vorrichtung nach einem der Ansprüche 1 bis 12 zum Ablängen des Endlosrohres zur Herstellung von Tubenrohrkörpern sowie mit der Vorrichtung nachgeordneten Mitteln zum Verbinden der mittels der Vorrichtung bereitgestellten Tubenrohrkörper mit einem Tubenkopf.

## Claims

1. A device for cutting to length a flexible endless tube comprising at least one plastic layer or consisting thereof for manufacturing tubular tube bodies for manufacturing packaging tubes, the device comprising conveyor means for driving the endless tube in a conveying direction (F), guide means (2) for guiding the endless tube at its outer circumference and cutting means (3) for cutting to length the endless tube along a cutting line extending along the endless tube in a circumferential direction (U), said cutting means (3) being disposed adjacent to the guide means (2) along the conveying direction (F),
**characterized in that**
the guide means (2) have a plurality of guide elements (5) disposed next to one another in a circumferential direction (U), limiting a cross-sectionally circular guide envelope contour (8) and adjustable perpendicularly to the conveying direction (F) by means of adjustment means (15) for adjusting a diameter (D) of the guide envelope contour.

2. The device according to claim 1,
**characterized in that**
guide elements (5) which are directly adjacent in the circumferential direction (U) are spaced from one another in the circumferential direction (U).

3. The device according to claim 1 or 2,
**characterized in that**
the guide elements (5) have a contour of a circle segment at the inner circumference.

4. The device according to any one of the preceding claims,
**characterized in that**
the adjustment means (15) are realized for adjusting several, in particular all, of the guide elements (5) in the radial direction at the same time, in particular by applying an adjustment force to each guide element, preferably against a restoring spring force.

5. The device according to any one of the preceding claims,
**characterized in that**
the adjustment means (15) are realized and disposed for adjusting the guide elements (5) perpendicularly to the conveying direction (F) by elastic deformation of the guide elements (5).

6. The device according to any one of the preceding claims,
**characterized in that**
the adjustment means (15), in particular an adjustment sleeve (14) of the adjustment means (15), are disposed for interacting with the guide elements (5) via at least one curved or oblique, in particular conical, contact surface (12, 13) to convert an axial adjusting movement of the adjustment means (15) into the adjusting movement of the guide elements (5).

7. The device according to claim 6,
**characterized in that**
the adjustment sleeve (14) has a thread (16) which is disposed for interacting with a counter thread (17) to axially adjust the adjustment sleeve (14) and thus to apply an adjustment force to the guide elements (5) perpendicularly to the conveying direction (F).

8. The device according to any one of the preceding claims,
**characterized in that**
the guide elements (5) are realized as guide fingers each having a free end (9), preferably pointing in the conveying direction (F), said guide fingers being fixed in place at their respective root zone (10) facing away from the free end (9), in particular on a common, preferably annular, support section.

9. The device according to any one of the preceding claims,
**characterized in that**
the diameter (D) of the guide envelope contour can be varied by means of the adjustment means (15) by a value of at least 0.1 mm, preferably by at least 0.2 mm, more preferably by at least 0.4 mm and/or by a value from a value range between 0.1 mm and 2.0 mm, preferably between 0.2mm and 1.5 mm, particularly preferably between 0.4 mm and 1.0 mm.

10. The device according to any one of the preceding claims,
**characterized in that**
the radial positions of the guide elements (5) differ from each other by less than 0.1 mm.

11. The device according to any one of the preceding claims,
**characterized in that**
at least one of the guide elements (5), preferably all guide elements (5), have a plurality of gas outlet openings for producing a gas cushion.

12. The device according to any one of the preceding claims,
**characterized in that**
a knife (4) of the cutting means (3) is disposed so as to be rotatable in a spaced manner from, preferably planar, end surfaces (18) of the guide elements (5) when the endless tube is being cut to length, the end surfaces (18) pointing in an axial direction, in particular in the conveying direction (F).

13. A method for operating a device according to any one of the preceding claims,
**characterized in that**
the diameter (D) of the guide envelope contour (8), which is defined by the guide elements (5), is adjusted and thereby adapted to the outer diameter of the endless tube.

14. A system for manufacturing packaging tubes, the system having means for manufacturing endless tubes, said means in particular comprising a welding device for the longitudinal welding of a substrate strip formed in a tubular shape or comprising extrusion means, said means serving for manufacturing a flexible endless tube comprising at least one plastic layer or consisting thereof, said system having a device according to any one of claims 1 to 12 which is disposed downstream of said means and serves for cutting to length the endless tube for manufacturing tubular tube bodies, and said system having means for connecting the tubular tube bodies provided by means of the device to a tube head, said means being disposed downstream of the device.

## Revendications

1. Dispositif servant à couper à longueur un tube sans fin flexible comprenant au moins une couche de matière plastique ou étant composé de ladite couche de matière plastique pour fabriquer des corps de tubes tubulaires pour fabriquer des tubes d'emballage, le dispositif ayant des moyens de transport destinés à entraîner le tube sans fin dans une direction de transport (F), des moyens de guidage (2) destinés à guider le tube sans fin sur sa circonférence extérieure et des moyens de coupe (3) destinés à couper à longueur le tube sans fin le long d'une ligne de coupe qui s'étend dans une direction circonférentielle (U) le long du tube sans fin, lesdits moyens de coupe (3) étant disposés de manière adjacente aux moyens de guidage (2),
**caractérisé en ce que**
les moyens de guidage (2) ont une pluralité d'éléments de guidage (5) qui sont disposés l'un à côté de l'autre dans une direction circonférentielle (U), lesdits éléments de guidage (5) limitant un contour de gaine de guidage (8) à section circulaire et étant ajustables perpendiculairement à la direction de transport (F) au moyen des moyens d'ajustement (15) destinés à ajuster un diamètre (D) du contour de gaine de guidage.

2. Dispositif selon la revendication 1,
**caractérisé en ce que**
des éléments de guidage (5) qui sont directement adjacents dans la direction circonférentielle (U) sont espacés dans la direction circonférentielle (U).

3. Dispositif selon la revendication 1 ou la revendication 2,
**caractérisé en ce que**
les éléments de guidage (5) ont un contour d'un segment de cercle à une circonférence intérieure.

4. Dispositif selon l'une quelconque des revendications précédentes,
**caractérisé en ce que**
les moyens d'ajustement (15) sont réalisés pour ajuster plusieurs éléments de guidage (5), notamment tous les éléments de guidage (5), dans une direction radiale, notamment en appliquant une force d'ajustement, de préférence contre une force de ressort de rappel.

5. Dispositif selon l'une quelconque des revendications précédentes,
**caractérisé en ce que**
les moyens d'ajustement (15) sont réalisés et disposés pour ajuster les éléments de guidage (5) perpendiculairement à la direction de transport (F) par une déformation élastique des éléments de guidage (5).

6. Dispositif selon l'une quelconque des revendications précédentes,
**caractérisé en ce que**
les moyens d'ajustement (15), notamment une douille d'ajustement (14) des moyens d'ajustement (15), sont disposés pour interagir avec les éléments de guidage (5) par au moins une surface de contact (12, 13) courbée ou inclinée, notamment conique, afin de convertir un mouvement de d'ajustement axial des moyens d'ajustement (15) en le mouvement d'ajustement des éléments de guidage (5).

7. Dispositif selon la revendication 6,
**caractérisé en ce que**
la douille d'ajustement (14) a un filetage (16) qui est disposé pour interagir avec un contre-filetage (17) afin d'ajuster la douille d'ajustement (14) de manière axiale et appliquer ainsi une force d'ajustement aux éléments de guidage (5) perpendiculairement à la direction de transport (F).

8. Dispositif selon l'une quelconque des revendications précédentes,
**caractérisé en ce que**
les éléments de guidage (5) sont réalisés comme doigts de guidage, chaque doigt de guidage ayant une extrémité (9) libre qui s'oriente préférentiellement dans la direction de transport (F), lesdits doigts de guidage étant disposés de manière fixe, notamment à une partie de support commune, de préférence annulaire, par leur une zone de base (10) respective qui est opposée à l'extrémité (9) libre.

9. Dispositif selon l'une quelconque des revendications précédentes,
**caractérisé en ce que**
le diamètre (D) du contour de gaine de guidage peut être varié au moyen des moyens d'ajustement (15) d'une valeur d'au moins 0,1mm, de préférence d'au moins 0,2mm, plus préférentiellement d'au moins 0,4 mm et/ou d'une valeur d'une plage de valeurs entre 0,1 mm et 2,0 mm, de préférence entre 0,2mm et 1,5mm, plus préférentiellement entre 0,4mm et 1,0 mm.

10. Dispositif selon l'une quelconque des revendications précédentes,
**caractérisé en ce que**
les positions radiales des éléments de guidage (5) diffèrent de moins de 0,1 mm.

11. Dispositif selon l'une quelconque des revendications précédentes,
**caractérisé en ce**
**qu'**au moins un des éléments de guidage (5), de préférence tous les éléments de guidage (5), ont une pluralité d'orifices de sortie de gaz destinés à produire un coussin de gaz.

12. Dispositif selon l'une quelconque des revendications précédentes,
**caractérisé en ce**
**qu'**un couteau (4) des moyens de coupe (3) est disposé de façon rotative de manière espacée de surfaces d'extrémité (18), de préférence planaires, des éléments de guidage (5) quand le tube sans fin est coupé à longueur, les surfaces d'extrémité (18) s'orientant dans la direction axiale, notamment dans la direction de transport (F).

13. Procédé de fonctionnement d'un dispositif selon l'une quelconque des revendications précédentes,
**caractérisé en ce que**
le diamètre (D) du contour de gaine de guidage (8), qui est défini par les éléments de guidage (5), est ajusté et adapté ainsi au diamètre extérieur du tube sans fin.

14. Système de fabrication de tubes d'emballage, le système ayant des moyens pour fabriquer des tubes sans fin, lesdits moyens comprenant notamment un dispositif de soudage pour le soudage longitudinal d'une bande de substrat qui est de forme tubulaire ou comprenant des moyens d'extrusion et servant à fabriquer un tube sans fin flexible qui comprend au moins une couche de matière plastique ou qui est composé de ladite couche de matière plastique, ledit système ayant un dispositif selon l'une quelconque des revendications 1 à 12, qui est disposé en aval desdits moyens et destiné à couper à longueur le tube sans fin pour fabriquer des corps de tubes tubulaires, et ledit système ayant des moyens pour connecter les corps de tubes tubulaires, fournis au moyen du dispositif, à une tête de tube, lesdits moyens étant disposés en aval du dispositif.
